# EUROPÄISCHE PATENTSCHRIFT

(11) **EP 2 586 290 B1**
(45) Veröffentlichungstag und Bekanntmachung des Hinweises auf die Patenterteilung: **29.03.2017**
(21) Anmeldenummer: 12188363.1
(22) Anmeldetag: 12.10.2012
(51) Int. Cl.: A01G 9/02

(54) **Pflanzentopf**
Plant pot
Pot pour plante

(30) Priorität: 31.10.2011 DE 202011107264 U
(43) Veröffentlichungstag der Anmeldung: 01.05.2013
(73) Patentinhaber: OSKO GmbH, 48607 Ochtrup (DE)
(72) Erfinder: Ostkotte, Ralf, 48607 Ochtrup (DE)
(74) Vertreter: dompatent von Kreisler Selting Werner - Partnerschaft von Patent- und Rechtsanwälten mbB

(56) Entgegenhaltungen:
- DE-B1- 2 118 841
- DE-U1- 29 512 334
- US-A- 5 176 284

## Beschreibung

Die Erfindung betrifft einen Pflanzentopf mit einem Topfboden, einer mit dem Topfboden verbundenen und das Topfinnere umgebenden Topfwand, an deren oberen Ende ein nach außen vorstehender Kragen derart ausgebildet ist, dass zwischen der Topfwand und dem Topfkragen ein quer zu der Topfwand und zu dem Kragen verlaufender, umlaufender Versatzrand gebildet ist.

Die Topfwand kann hierbei von kreisrundem Querschnitt, das heißt zylindrisch oder konisch, mit kreisrundem Topfboden ausgebildet sein. Alternativ ist denkbar, dass die Topfwand auch einen rechteckförmigen Querschnitt aufweist.

Der Kragen ist am oberen Ende der Topfwand ausgebildet und mit der Topfwand durch einen Versatzrand verbunden. Der Versatzrand bildet einen Überstand nach außen zu dem Kragen. Der Kragen ist ebenfalls entweder zylindrisch bzw. konisch oder von rechteckförmigem Querschnitt. Der Kragen bildet somit gewissermaßen eine nach außen vorspringende Verlängerung der Topfwand, um die Topfwand zu stabilisieren. Mit dem Versatzrand ist es möglich, den Pflanzentopf beispielsweise mit einer Gabel von außen zu greifen und anzuheben. Typischerweise sind der Topfboden und der Versatzrand parallel zueinander in Horizontalebenen angeordnet, während die Topfwand und der Kragen vertikal verlaufend angeordnet sind. Hierbei werden auch konisch verlaufende Topfwände oder Topfkrägen als im weitesten Sinne vertikal angeordnet angesehen. Unter einer vertikalen Anordnung wird folglich auch noch eine Abweichung von wenigen Grad, maximal etwa 10°, aus der Vertikalen verstanden.

Bei Pflanzentöpfen werden nach dem Einbringen des Pflanzbodens oftmals Stecketiketten mit aufgedruckten Informationen über die jeweilige Pflanze in den Boden gesteckt. Die Stecketiketten dienen als Hinweis für den Käufer und/oder den Gärtner, wie mit der jeweiligen Pflanze umzugehen ist.

Die Pflanzetiketten sind typischerweise erst nach Einbringen des Pflanzbodens in den Pflanzentopf zu stecken. Gerade bei harten, schweren Böden besteht die Gefahr eines Umknickens der Etikettspitze oder einer Beschädigung bzw. eines Zerbrechens des Etiketts. Die Pflanzetiketten sind oftmals aus vergleichsweise dünnem Material hergestellt. Um beim Einstecken des Etiketts in den Pflanzentopf die erforderliche Stabilität zu erzielen, wird das Pflanzetikett oftmals zwischen den Pflanzenboden und die Innenseite der Topfwand gesteckt. Bei Pflanzentöpfen der oben geschilderten Art mit nach außen vorstehendem Kragen behindert der Versatzrand ein Einstecken des Etiketts zwischen den Boden und die Innenseite der Topfwand.

Der Erfindung liegt die Aufgabe zugrunde, einen Pflanzentopf zu schaffen, der das Einstecken von Stecketiketten erleichtert.

Der erfindungsgemäße Pflanzentopf ist definiert durch die Merkmale von Anspruch 1.

Demnach sind an der Innenseite des Kragens und an der Oberseite des Versatzrandes Gleitstege ausgebildet, die eine gegenüber dem Kragen und gegenüber dem Versatzrand geneigte Gleitfläche schaffen. Bei Einstecken des Etiketts senkrecht von oben entlang der Innenseite des Kragens werden die Spitzen bzw. die unteren Enden der Pflanzetiketten von den Gleitflächen an dem Versatzrand vorbei geführt und gelangen automatisch zwischen die Innenseite der Topfwand und den Pflanzenboden, ohne dass die Gefahr einer Beschädigung oder gar eines Abbrechens des Etiketts besteht.

Vorzugsweise sind die Topfwand und der Kragen zylindrisch und/oder konisch ausgebildet. Hierbei wird unter einer konischen Form eine Form verstanden, deren einander gegenüber liegende Stirnseiten kreisrund und von verschiedenem Durchmesser sind. Hierbei entspricht die Mittellängsachse des Kragens einer Verlängerung der Mittellängsachse der Topfwand. Die Mittellängsachse verläuft vertikal, so dass die Topfwand und der Kragen vertikal ausgerichtet sind. Der Topfboden ist hierbei kreisrund und in einer Horizontalebene angeordnet. Entsprechend ist der Versatzrand zwischen dem oberen Ende der Topfwand und dem unteren Ende des Kragens als horizontale Ringscheibe ausgebildet.

Die Gleitstege sind vorzugsweise entlang des gesamten Umfangs des Kragens in gleichmäßigen Abständen ausgebildet. Hierbei können in gleichmäßigen Abständen zueinander zwischen einigen der Gleitstege Stabilisierungsstege ausgebildet sein, die ebenfalls mit dem Versatzrand und mit dem Kragen fest verbunden sind. Eine Verteilung der Gleitstege entlang des gesamten Umfangs des Pflanzentopfs ermöglicht ein Einstecken des Pflanzenetiketts an einer beliebigen Stelle entlang des Umfangs.

Die Gleitstege sind vorteilhafterweise jeweils als im Wesentlichen rechtwinklige Dreiecke in seitlicher Ansicht ausgebildet. Im Wesentlichen rechtwinklig bedeutet hierbei bis auf eine Abweichung von wenigen, maximal 10°. Auch im Falle einer konischen Form des Kragens mit einer Abweichung von maximal 10° aus der Vertikalen wird der resultierende Gleitsteg als rechtwinklig mit einer Abweichung von maximal 10° bezeichnet. Hierbei sind die Katheten der Dreiecke mit dem Versatzrand und mit der Innenseite des Kragens fest, vorzugsweise einstückig verbunden. Die Hypotenusen der Dreiecke bilden dann die Gleitfläche für die Stecketiketten.

Vorzugsweise ist die Gleitfläche in einem Winkel im Bereich zwischen 40° und 80°, vorzugsweise 40° - 50° bzw. 45° gegenüber der Horizontalebene des Versatzrandes geneigt angeordnet.

Der Pflanzentopf ist vorteilhafterweise einstückig aus Kunststoff zum Beispiel durch ein Spritzgussverfahren gefertigt.

Im Folgenden wird anhand der Figuren ein Ausführungsbeispiel der Erfindung näher erläutert. Es zeigen:
- Fig. 1:: Eine perspektivische Ansicht des erfindungsgemäßen Topfs und
- Fig. 2:: eine Detailansicht des Topfkragens.

Der Pflanzentopf 10 weist einen kreisrunden Topfboden 12 und eine leicht konisch ausgebildete, mit dem Topfboden 12 verbundene Topfwand 14 auf. Die Topfwand 14 ist rotationssymmetrisch mit einer vertikal angeordneten Rotationsachse als Mittellängsachse ausgebildet, während der Topfboden 12 in einer Horizontalebene zum Aufliegen auf einem horizontalen Untergrund angeordnet ist. Die Topfwand bildet einen rotationssymmetrischen Körper mit zwei einander gegenüber liegenden Stirnseiten. Die Stirnseite mit geringerem Durchmesser wird durch den Topfboden 12 gebildet. Die Stirnseite mit größerem Durchmesser ist an dem oberen, dem Topfboden 12 gegenüber liegenden Ende der Topfwand 14 ausgebildet. Die Topfwand 14 umgibt das Innere 16 des Pflanzentopfes 10, in das der Pflanzboden eingebracht wird.

Am oberen Ende der Topfwand 14 ist ein nach außen vorstehender, rotationssymmetrischer und ebenfalls konisch ausgebildeter Kragen 18 angeordnet. Nach außen vorstehend bedeutet hierbei, dass der Durchmesser einer jeden kreisrunden Schnittfläche durch den Kragen 18 jeweils größer als der Durchmesser einer jeden Schnittfläche durch die Topfwand 14 ist. Dadurch resultiert am unteren Ende des Kragens 18 ein Versatz gegenüber der Topfwand 14. Dieser Versatz ist durch einen Versatzrand 20 verschlossen, der einstückig mit der Topfwand 14 und mit dem Kragen 18 verbunden ist. Der Versatzrand 20 bildet eine Ringscheibe in der Horizontalebene parallel zu der Ebene des Topfbodens 12.

An der Innenseite 22 des Kragens und an der Oberseite 24 des Versatzrandes 20 sind Gleitstege 26 ausgebildet. In seitlicher Ansicht haben die Gleitstege 26 die Form eines annähernd rechtwinkligen Dreiecks, dessen eine Kathete 28 mit der Oberseite 24 des Versatzrandes fest verbunden ist. Die andere Kathete 28 ist mit der Innenseite 22 des Kragens 18 fest verbunden. Die Hypotenuse 30 jedes Gleitsteges 26 bildet eine Gleitfläche 32 für die Stecketiketten 34.

Die Gleitstege 26 sind entlang des gesamten Umfangs des Kragens 18 in gleichmäßigen Abständen zueinander angeordnet, wobei nach jedem siebten Gleitsteg 26 ein Stabilisierungssteg 36 folgt. Die Stabilisierungsstege 36 sind ebenfalls jeweils mit der Oberseite 24 des Versatzrandes 20 und mit der Innenseite 22 des Kragens 18 fest verbunden.

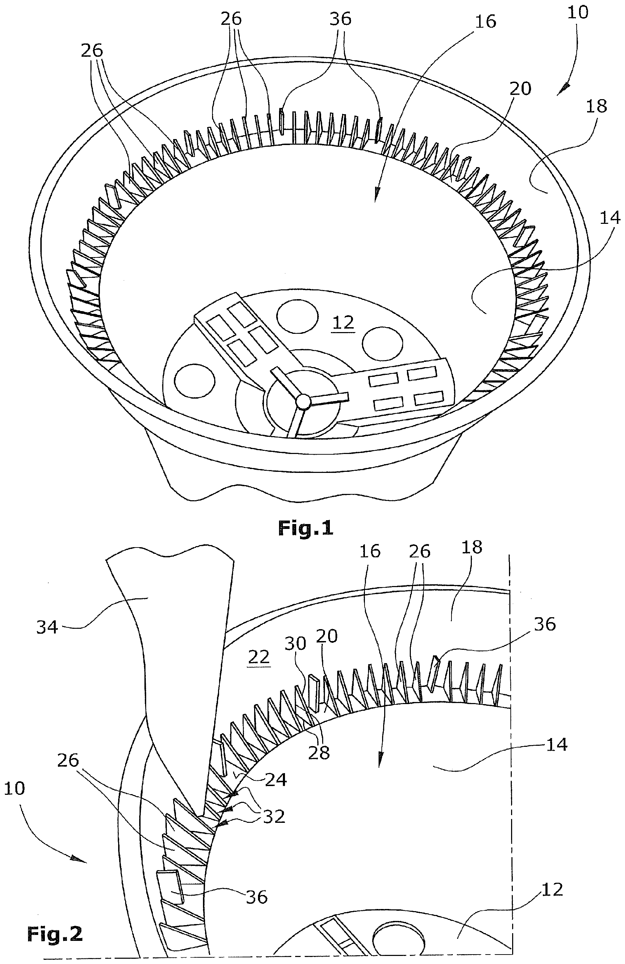

Fig. 2 zeigt, wie ein Stecketikett 34 entlang der Innenseite 22 des Kragens 18 in den Pflanzentopf 10 eingeführt wird. Fig. 2 zeigt den Pflanzentopf 10 ohne enthaltenen Pflanzboden. Wenn der Topf 10 mit Boden gefüllt ist, wird das Pflanzenetikett 34 ähnlich wie in Fig. 2 entlang der Innenseite 22 des Kragens 18 zwischen Kragen 18 und dem Boden senkrecht von oben nach unten eingesteckt, wobei der Zwischenraum zwischen Boden und Kragen genutzt wird. Die untere Spitze des Stecketiketts 34 wird, wie in Fig. 2 angedeutet, entlang der Gleitflächen 32 von den Gleitstegen 26 in Richtung nach innen geführt und gelangt so zwischen die Innenseite der Topfwand 14 und des Pflanzbodens, ohne dass die Gefahr eines Umknickens, Beschädigens oder gar Zerbrechens des Stecketiketts 34 besteht.

## Patentansprüche

1. Pflanzentopf (10) mit einem Topfboden (12) und einer mit dem Topfboden (12) verbundenen, das Topfinnere (16) außen umgebenden, umlaufenden Topfwand (14), an deren oberem Ende ein gegenüber der Topfwand (14) nach außen vorspringender, umlaufender Kragen (18) derart ausgebildet ist, dass zwischen der Topfwand (14) und dem Kragen (18) ein quer zu der Topfwand (14) und zu dem Topfkragen verlaufender, umlaufender Versatzrand (20) gebildet ist,
**dadurch gekennzeichnet, dass**
an der Innenseite des Topfkragens und an der Oberseite des Versatzrandes (24) entlang der gesamten Länge des Kragens (18) Gleitstege (26) angeordnet sind, die eine gegenüber der Krageninnenseite und gegenüber der Versatzrandoberseite (24) geneigte Gleitfläche (32) bilden, derart, dass ein Stecketikett beim Einstecken zwischen im Topfinneren (16) enthaltenem Pflanzenboden und die Innenseite des Topfkragens (18) von den Gleitflächen (32) an dem Versatzrand (20) vorbeigeführt wird.

2. Pflanzentopf (10) nach Anspruch 1, **dadurch gekennzeichnet, dass** der Topfboden (12) kreisrund und die Topfwand (14) und der Kragen (18) im Wesentlich zylindrisch oder konisch zulaufend ausgebildet sind, wobei der Versatzrand (20) eine parallel zu dem Topfboden (12) angeordnete Ringscheibe bildet.

3. Pflanzentopf (10) nach Anspruch 1 oder 2, **dadurch gekennzeichnet, dass** die Gleitstege (26) in gleichmäßigen Abständen entlang des gesamten Umfangs des Kragens (18) angeordnet sind.

4. Pflanzentopf (10) nach Anspruch 1 oder 2, **dadurch gekennzeichnet, dass** die Gleitstege (26) in seitlicher Ansicht als im Wesentlichen rechtwinklige Dreiecke ausgebildet sind, deren Katheten (28) mit dem Kragen (18) und mit dem Versatzrand (20) verbunden sind und deren Hypotenuse (30) die Gleichfläche bildet.

5. Pflanzentopf (10) nach Anspruch 1 oder 2, **dadurch gekennzeichnet, dass** in gleichmäßigen Abständen zwischen einigen der Gleitstege (26) Stabilisierungsstege (36) mit dem Kragen (18) und mit dem Versatzrand (20) verbunden sind.

6. Pflanzentopf (10) nach Anspruch 1 oder 2, **dadurch gekennzeichnet, dass** der Pflanzentopf (10) einstückig aus Kunststoff gefertigt ist.

## Claims

1. Plant pot (10) having a pot bottom (12) and a circumferential pot wall (14) connected with the pot bottom (12) and surrounding the interior (16) of the pot on the outside, the upper end of the pot wall being formed with a circumferential collar (18) protruding outward with respect to the pot wall (14), the collar being formed such that a circumferential offset edge (20) is formed between the pot wall (14) and the collar (18), the edge extending transversely to the pot wall (14) and the pot collar,
**characterized in that**
sliding webs (26) are arranged along the entire length of the collar (18) on the inner side of the pot collar and on the top of the offset edge (24), said webs forming a sliding surface (32) inclined with respect to the inner side of the collar and the top surface (24) of the offset edge, such that a tag is guided past the offset edge (20) by the sliding surfaces (32) when said tag is inserted between the plant bottom in the interior (16) of the pot and the inner side of the pot collar (18).

2. Plant pot (10) of claim 1, **characterized in that** the pot bottom (12) is circular and the pot wall (14) and the collar (18) are substantially cylindrical or conically tapering in shape, the offset edge (20) forming an annular disc arranged in parallel with the pot bottom (12).

3. Plant pot (10) of claim 1 or 2, **characterized in that** the sliding webs (26) are arranged at regular intervals along the entire circumference of the collar (18).

4. Plant pot (10) of claim 1 or 2, **characterized in that** the sliding webs (26) are formed as substantially rectangular triangles, seen in side view, the legs (28) of which are connected with the collar (18) and the offset edge (20) and the hypotenuse (30) of which forms the sliding surface.

5. Plant pot (10) of claim 1 or 2, **characterized in that** at regular intervals between some of the sliding webs (26) stabilizing webs (36) are connected with the collar (18) and the offset edge (20).

6. Plant pot (10) of claim 1 or 2, **characterized in** the plant pot (10) is integrally made of plastic material.

## Revendications

1. Pot pour plante (10) avec un fond de pot (12) et une paroi de pot (14) périphérique, solidaire du fond de pot (12) et entourant l'intérieur (16) du pot, à l'extrémité supérieure de laquelle un collet (18) périphérique en saillie vers l'extérieur est formé de façon qu'un bord décalé (20) périphérique s'étendant transversalement à la paroi de pot (14) et au collet de pot soit formé entre la paroi de pot (14) et le collet (18),
**caractérisé en ce que**
des entretoises glissières (26) sont disposées sur la face intérieure du collet de pot et sur la face supérieure du bord décalé (24) sur la longueur entière du collet (18), lesquelles entretoises forment une surface glissière (32) inclinée par rapport à la face intérieure du collet et par rapport à la face supérieure du bord décale (24), de façon qu'une étiquette à enficher, lorsqu'elle est enfichée entre une motte de plante contenue dans l'intérieur (16) du pot et la face intérieure du collet de pot (18), soit passée par les surfaces glissières (32) devant le bord décalé (20).

2. Pot pour plante (10) selon la revendication 1, **caractérisé en ce que** le fond de pot (12) présente une forme circulaire et que la paroi de pot (14) et le collet (18) présentent une forme sensiblement cylindrique ou conique, le bord décalé (20) formant un disque annulaire disposé parallèlement au fond de pot (12).

3. Pot pour plante (10) selon la revendication 1 ou 2, **caractérisé en ce que** les entretoises glissières (26) sont disposées à des distances régulières le long de la circonférence entière du collet (18).

4. Pot pour plante (10) selon la revendication 1 ou 2, **caractérisé en ce que** les entretoises glissières (26) présentent, en vue latérale, sensiblement la forme de triangles rectangles dont les côtés d'angle droit (28) sont solidaires du collet (18) et du bord décalé (20) et dont l'hypoténuse (30) forme la surface glissière.

5. Pot pour plante (10) selon la revendication 1 ou 2, **caractérisé en ce que**, à des distances régulières entre quelques unes des entretoises glissières (26), des entretoises de stabilisation (36) sont solidaires du collet (18) et du bord décalé (20).

6. Pot pour plante (10) selon la revendication 1 ou 2, **caractérisé en ce que** le pot pour plante (10) est fabriqué en une seule pièce en matière synthétique.
